# EUROPÄISCHE PATENTSCHRIFT

(11) **EP 3 388 232 B1**
(45) Veröffentlichungstag und Bekanntmachung des Hinweises auf die Patenterteilung: **20.05.2020**
(21) Anmeldenummer: 18000281.8
(22) Anmeldetag: 21.03.2018
(51) Int. Cl.: B32B 7/12, B32B 15/08, B32B 15/20, B32B 27/10, B32B 29/00, B32B 37/00, B32B 37/06, B32B 37/14, B32B 3/12

(54) **VERFAHREN ZUR HERSTELLUNG EINER SANDWICHSTRUKTUR UND NACH DEM VERFAHREN HERGESTELLTE SANDWICHSTRUKTUR**
METHOD FOR PRODUCING A SANDWICH STRUCTURE AND SANDWICH STRUCTURE PRODUCED ACCORDING TO THE METHOD
PROCÉDÉ DE FABRICATION D'UNE STRUCTURE EN SANDWICH ET STRUCTURE EN SANDWICH FABRIQUÉE SELON LEDIT PROCÉDÉ

(30) Priorität: 11.04.2017 DE 102017003471
(43) Veröffentlichungstag der Anmeldung: 17.10.2018
(73) Patentinhaber: Diehl Aviation Laupheim GmbH, 88471 Laupheim (DE)
(72) Erfinder: Hesselbach, Florian, DE - 89134 Blaustein (DE); Büttner, Daniela, 72555 Metzingen (DE); Utikal, Sven, DE - 88483 Burgrieden (DE)
(74) Vertreter: Diehl Patentabteilung

(56) Entgegenhaltungen:
- EP-A1- 2 133 197
- DE-A1- 2 012 518
- US-A1- 2006 083 892
- DATABASE WPI Week 198013 Thomson Scientific, London, GB; AN 1980-22651C XP002783022, & JP S55 21242 A (SUMITOMO CHEM CO LTD) 15. Februar 1980 (1980-02-15)
- DATABASE WPI Week 200925 Thomson Scientific, London, GB; AN 2009-F26361 XP002783023, & CN 101 357 522 A (GUANGZHOU LUSHAN CHEM MATERIAL CO LTD) 4. Februar 2009 (2009-02-04)
- DATABASE WPI Week 201022 Thomson Scientific, London, GB; AN 2010-C39812 XP002783024, & KR 2010 0020713 A (HAN IL E HWA CO LTD) 23. Februar 2010 (2010-02-23)

## Beschreibung

Die Erfindung betrifft ein Verfahren zur Herstellung einer Sandwichstruktur mit einem Wabenkern und wenigstens einer Decklage.

Derartige Sandwichstrukturen werden bei Leichtbauanwendungen eingesetzt, beispielsweise bei Fahrzeugen und Flugzeugen. Eine Sandwichstruktur kann beispielsweise eine Komponente einer Innenverkleidung sein, ebenso kann es sich um eine Klappe, einen Deckel, ein Element eines Gepäckfaches, einer Bordküche oder Toilette oder um eine Bodenplatte handeln. Im Allgemeinen bestehen derartige Sandwichstrukturen aus einem Wabenkern, der auch als Honeycomb bezeichnet wird. Der Wabenkern kann aus Papier bestehen, das beispielsweise aus aromatischem Polyamid (Meta-Aramid) hergestellt ist. Das Papier kann z. B. mit einem Melaminharz oder Phenolharz getränkt sein. Der Wabenkern kann eine sechseckige Zellstruktur oder Sinuswaben aufweisen und ermöglicht die Herstellung von steifen Bauteilen, die ein besonders geringes Gewicht aufweisen. Alternativ kann die Sandwichstruktur auch Faltkerne aufweisen. Die Sandwichstruktur ist wenigstens an einer Seite mit einer Decklage versehen. Die Decklage kann durch ein Gewebe, Gestrick oder eine Kombination von Gewebe und Vlies gebildet werden. Bisher wurden überwiegend duroplastische Decklagen verwendet. Ein Fasermaterial, beispielsweise Glasfaser oder Kohlefaser, wird dazu mit einem Harz imprägniert und vorvernetzt, diese Halbzeuge werden als Prepreg bezeichnet. Das Harz des Prepregmaterials fließt beim Aushärten und bildet einen Meniskus zwischen Stegen des Wabenkerns und der Decklage. Auf diese Weise wird eine gute Haftung ermöglicht.

Aus der DE 10 2004 041 454 A1 ist ein Verfahren zur Herstellung einer Sandwichstruktur bekannt. Dabei wird eine Leichtbauplatte, die einen thermoplastischen Stützkern aufweist, mit einem Fasermaterial verbunden, indem flüssiges thermoplastisches Material zugeführt wird. Unter Druckeinwirkung wird das flüssige thermoplastische Material in das Fasermaterial eingewalzt, eingewalkt und anschließend abgekühlt. Wenn ein Wabenkern mit einer thermoplastischen Decklage versehen werden soll, ist es nicht möglich, das für duroplastische Harze übliche Herstellungsverfahren einzusetzen, da die Viskosität der Thermoplastmatrix zu hoch ist. In diesen Fällen werden üblicherweise Klebfilme eingesetzt, die zwischen der Decklage und dem Wabenkern eingebracht werden. Derartige Klebfilme können auf einem reaktiven Klebstoffsystem beruhen, alternativ kann ein Hot-Melt-System eingesetzt werden. Die Klebstoffe können in Form von Filmen, Folien oder Vliesen eingesetzt werden. Alle derartigen Materialien und Herstellungsverfahren weisen den Nachteil auf, dass sie vergleichsweise teuer sind, das Gewicht der Sandwichstruktur erhöhen und das Brandverhalten verschlechtern.

Weitere Verfahren zur Herstellung von Sandwichstrukturen sind aus der DE 2012518 A, der EP 2 133 197 A1 und der JP S-5521242 A sowie der CN 101357522 B, der KR 10-2010-0020713 und der US 2006/083892 A1 bekannt.

Der Erfindung liegt daher die Aufgabe zugrunde, ein Verfahren zur Herstellung einer Sandwichstruktur anzugeben, das für eine thermoplastische Decklage geeignet ist und eine ausreichende Haftung zwischen dem Wabenkern und der Decklage ermöglicht.

Zur Lösung dieser Aufgabe ist ein Verfahren mit den folgenden Schritten vorgesehen:
- Aufbringen eines pulverförmigen thermoplastischen Materials auf eine Seite des Wabenkerns,
- Auflegen der Decklage auf die mit dem pulverförmigen thermoplastischen Material versehene Seite des Wabenkerns,
- Erwärmen des mit der Decklage versehenen Wabenkerns zum Plastifizieren des thermoplastischen Materials, und
- Verpressen des Wabenkerns und der Decklage in dem oder in einem erwärmten Zustand zur Herstellung der Sandwichstruktur.

Erfindungsgemäß wird in einem ersten Verfahrensschritt vor dem Aufbringen des im folgenden auch Pulver bezeichneten pulverförmigen thermoplastischen Materials ein Haftmittel auf den Wabenkern aufgebracht. Wasser wird als Haftmittel verwendet. Das Haftmittel dient dazu, das pulverförmige thermoplastische Material temporär an dem Wabenkern zu fixieren, bis die Decklage aufgelegt wird und das Verpressen des Wabenkerns unter Erwärmung erfolgt. Das Haftmittel, das auch als Haftagens bezeichnet wird, wird lediglich in dem Bereich auf den Wabenkern aufgebracht, auf den anschließend das pulverförmige thermoplastische Material aufgebracht wird. Demnach wird der Wabenkern nicht über seine gesamte Dicke mit dem Haftmittel versehen, sondern lediglich an seiner Außenfläche, gegebenenfalls an beiden gegenüberliegenden Au-ßenflächen und in daran direkt angrenzenden Bereichen. Nach dem ersten Verfahrensschritt erfolgt kein Erwärmen und Aufschmelzen des an dem Wabenkern fixierte pulverförmigen thermoplastischen Materials, und die Decklage wird unmittelbar auf die Seite des Wabenkerns aufgelegt und anschließend erfolgt das Erwärmen dieser Anordnung auf eine Temperatur, bei der das thermoplastische Material plastifiziert.

Die Erfindung beruht auf der Erkenntnis, dass zum Erzielen einer guten Haftung zwischen dem Wabenkern und der Decklage ein thermoplastisches Material in Pulverform auf wenigstens eine Seite des Wabenkerns aufgebracht werden kann. Das pulverförmige Material befindet sich dann an der Kontaktfläche zwischen dem Wabenkern und der Decklage. Nach dem Auflegen der Decklage des mit dem pulverförmigen thermoplastischen Material versehenen Wabenkerns wird die Anordnung erwärmt, sodass das pulverförmige thermoplastische Material plastifiziert. Durch das Verpressen des aus dem Wabenkern und der wenigstens einen Decklage bestehenden Verbunds wird eine feste mechanische Verbindung zwischen dem Wabenkern und der Decklage erzeugt. Das erfindungsgemäße Verfahren weist den Vorteil auf, dass auf die Anbringung separater Klebefilme oder anderer Klebstoffsysteme verzichtet werden kann, die ansonsten zu einer unerwünschten Gewichtserhöhung führen. Indem das pulverförmige thermoplastische Material lediglich in den Bereichen aufgebracht wird, in denen eine Verklebung stattfinden soll, genügt bereits eine vergleichsweise geringe Menge des pulverförmigen thermoplastischen Materials. Ein weiterer Vorteil ist darin zusehen, dass das Aufbringen des pulverförmigen thermoplastischen Materials in einem automatischen Fertigungsprozess erfolgen kann.

Eine bevorzugte Variante des erfindungsgemäßen Verfahrens sieht vor, dass das pulverförmige thermoplastische Material auf beide Seiten des Wabenkerns aufgebracht wird, die jeweils mit einer Decklage versehen, erwärmt und verpresst werden. Auf diese Weise können beispielsweise plattenförmige oder dreidimensionale Sandwichichstrukturen hergestellt werden. Dabei kann es sich beispielsweise um Komponenten der Innenverkleidung eines Fahrzeugs oder Flugzeugs handeln, ebenso können auf diese Weise ein- oder mehrfach gekrümmte Strukturen wie Klappen, Deckel oder Türen und dergleichen hergestellt werden.

Es wird bevorzugt, dass das Haftmittel bei dem erfindungsgemäßen Verfahren durch einen Tauchprozess oder durch einen Sprühprozess auf den Wabenkern aufgetragen wird. Durch einen Tauchprozess, bei dem der Wabenkern kontrolliert in ein Haftmittelbad eingetaucht wird, kann die Benetzung mit dem Haftmittel exakt gesteuert werden. Bei einem Sprühprozess kann der Wabenkern beispielsweise an einer ortsfesten Sprüheinrichtung vorbeigeführt werden. Es ist auch denkbar, den Wabenkern in einer Haltevorrichtung anzuordnen, die so ausgebildet ist, dass lediglich ein zu besprühender Bereich frei liegt, während nicht zu besprühende Bereiche abgedeckt sind. Auf diese Weise wird sichergestellt, dass lediglich diejenigen Bereiche des Wabenkerns mit dem Haftmittel versehen werden, die anschließend mit dem pulverförmigen thermoplastischen Material versehen werden.

Bei dem erfindungsgemäßen Verfahren wird Wasser als Haftmittel verwendet. Dadurch ergibt sich der Vorteil, dass das Wasser beim Erwärmen und Schmelzen des thermoplastischen Materials verdunstet. In einer nicht zur Erfindung gehörenden Alternative kann auch ein Klebstoff als Haftmittel verwendet werden.

Es liegt auch im Rahmen der Erfindung, dass das pulverförmige thermoplastische Material durch Eindrücken des Wabenkerns in das Pulver oder eine das Pulver enthaltende pastöse Masse und/oder durch Berieseln mit dem pulverförmigen thermoplastischen Material und/oder durch Bepulvern mittels Druckluft auf den Wabenkern, insbesondere durch Verwirbeln des pulverförmigen thermoplastischen Materials aufgebracht wird. Sofern zuvor ein Haftmittel aufgetragen wurde, haftet das pulverförmige thermoplastische Material lediglich an den mit dem Haftmittel benetzten Stellen. Dadurch kann sichergestellt werden, dass lediglich die äußere Kontaktfläche des Wabenkerns, auf die die Decklage aufgelegt wird, und gegebenenfalls ein direkt daran angrenzender Bereich, mit dem pulverförmigen thermoplastischen Material versehen wird.

Bei einer bevorzugten Ausführunsgform erfolgt das Erwärmen und Plastifizieren des pulverförmigen thermoplastischen Materials z. B. mittels Infrarotstrahlung oder mittels eines Ofens. Alternativ kann das Erwärmen und Plastifizieren mit einer beheizbaren Presse oder mittels einer Heißluftanlage oder bei einem elektrisch leitfähigen Wabenkern mittels induktiver Erwärmung erfolgen. Sofern ein Klebstoff als Haftmittel verwendet wird, kann dieser durch Zufügen von Wärme, UV-Licht oder Luftfeuchte vernetzt werden. Infrarotstrahlung kann durch ein Heizfeld erzeugt werden. Ein elektrisch leitfähiger Wabenkern kann beispielsweise ein aus Aluminiumwaben bestehender Wabenkern sein.

Durch das Erwärmen des mit der Decklage versehenen Wabenkerns wird das pulverförmige thermoplastische Material plastifiziert. Das bedeutet, dass es durch die Temperaturerhöhung fließfähig wird, sodass es sich während des Verpressens mit der Decklage verbindet. Es ist nicht erforderlich, dass das thermoplastische Material in einen vollständig geschmolzenen bzw. flüssigen Zustand gebracht wird. Die Temperatur, auf die der mit der Decklage versehene Wabenkern erwärmt wird, wird so festgelegt, dass das thermoplastische Material ausreichend fließfähig ist, sodass es sich mit der Decklage verbindet, anderseits darf es nicht so flüssig sein, dass es unter der Wirkung der Schwerkraft von der Kontaktfläche verläuft.

Vorzugsweise ist es bei dem erfindungsgemäßen Verfahren vorgesehen, dass das auf den Wabenkern aufgebrachte pulverförmige thermoplastische Material auf eine Temperatur unterhalb seines Schmelzpunkts abgekühlt wird. Dadurch wird eine Haftung des thermoplastischen Materials auf bzw. an dem Wabenkern sichergestellt, ohne dass ein Haftmittel vorhanden ist. Sofern zuvor eine Flüssigkeit als Haftmittel verwendet wurde, verdunstet diese beim Erwärmen. Beim Abkühlen des thermoplastischen Materials unter seinen Schmelzpunkt haftet dieses an dem Wabenkern.

Im Rahmen des erfindungsgemäßen Verfahrens kann das Verpressen des Wabenkerns in einem Pressprozess erfolgen. Hierbei können einzelne Stücke in einer Heißpresse gepresst werden oder es erfolgt ein kontinuierliches Pressen in einer Doppelbandpresse oder ein semi-kontinuierliches Pressen in einer Intervallpresse. Weiterhin kann das Verpressen des Wabenkerns in einem Ofenprozess oder in einem Autoklavprozess oder in einem Schweißprozess oder in einem Prozess mit induktiver Erwärmung erfolgen. Alle erwähnten Verfahren dienen dazu, eine ausreichende Haftung zwischen dem Wabenkern und der Decklage sicherzustellen. Nach dem Pressvorgang bildet das thermoplastische Material eine Verbindung zwischen dem Wabenkern und der Decklage. Vorteilhafter Weise befindet sich das thermoplastische Material lediglich an den Kontaktstellen, an denen es zur Herstellung der Verbindung benötigt wird. Es ist jedoch nicht flächig auf der Decklage aufgetragen, wodurch sich eine beträchtliche Gewichtsersparnis sowie Kostenreduktion ergibt.

Mit besonderem Vorteil kann es bei dem erfindungsgemäßen Verfahren vorgesehen sein, dass pulverförmiges Polycarbonat als thermoplastisches Material verwendet wird. Es kommen jedoch auch andere pulverförmige thermoplastische Materialien in Frage, die eine gute Haftung zwischen dem Wabenkern und der Decklage ermöglichen.

Besonders bevorzugt wird es bei dem erfindungsgemäßen Verfahren, dass ein mit einem Flammschutzmittel versehenes thermoplastisches Material verwendet wird.

Daneben betrifft die Erfindung eine Sandwichstruktur mit einem Wabenkern und wenigstens einer Decklage, die durch ein Verfahren der beschriebenen Art hergestellt ist.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: das Aufbringen eines Haftmittels auf einen Wabenkern,
- Fig. 2: das Aufbringen des Pulvers,
- Fig. 3: das Erwärmen des Wabenkerns zum Fixieren des pulverförmigen Materials (nicht erfindungsgemäß),

- Fig. 4: das Verpressen des Wabenkerns mit Decklagen und
- Fig. 5: eine durch das erfindungsgemäße Verfahren hergestellte Sandwichstruktur.

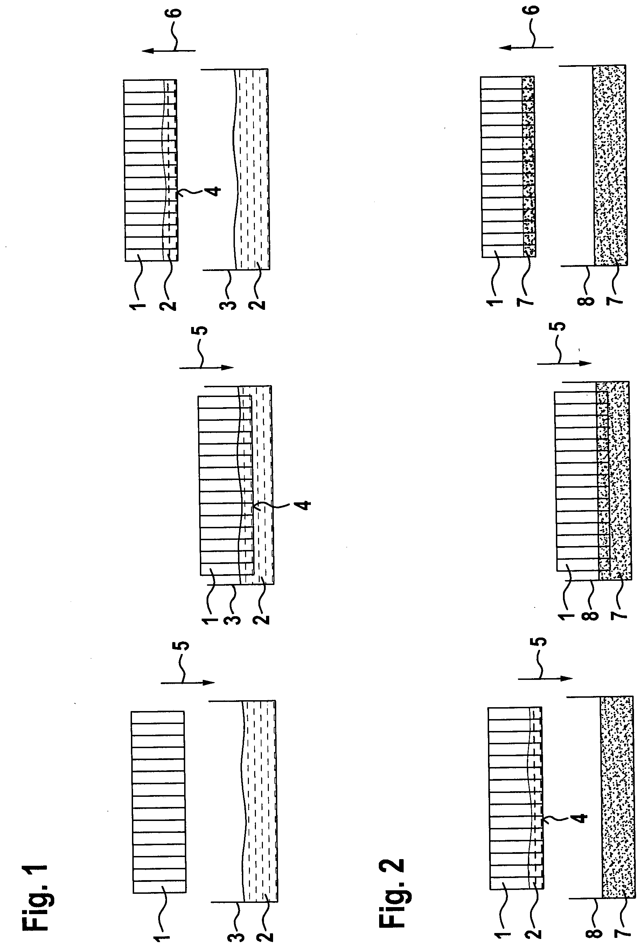

Fig. 1 zeigt den ersten Schritt des Verfahrens zur Herstellung einer Sandwichstruktur. Der schematisch dargestellte Wabenkern 1 besteht in diesem Ausführungsbeispiel aus einem Papier auf der Basis von aromatischen Polyamidfasern (Meta-Aramid), das mit einem Melaminharz durchtränkt ist. In dem in Fig. 1 gezeigten ersten Verfahrensschritt wird ein Haftmittel auf den Wabenkern 1 aufgebracht. In diesem Ausführungsbeispiel handelt es sich bei dem Haftmittel um Wasser 2, das in einem Behälter 3 aufgenommen ist. In der linken Darstellung von Fig. 1 ist gezeigt, dass der Wabenkern 1 parallel zu seiner Unterseite in Richtung des Pfeils 5 abgesenkt wird, bis die in der mittleren Darstellung von Fig. 1 gezeigte Position erreicht ist. Die Unterseite 4 des Wabenkerns 1 wird auf diese Weise mit Wasser 2 als Haftmittel benetzt. Anschließend wird der Wabenkern 1 in Richtung des in der rechten Darstellung von Fig. 1 gezeigten Pfeils 6 angehoben.

Fig. 2 zeigt den nächsten Schritt des Verfahrens zur Herstellung der Sandwichstruktur. Ein pulverförmiges thermoplastisches Material 7 befindet sich in einem Behälter 8. Um das pulverförmige thermoplastische Material 7 auf die Unterseite 4 des Wabenkerns 1 aufzubringen, wird der Wabenkern 1 parallel zu seiner Unterseite 4 in Richtung des Pfeils 5 abgesenkt und in das pulverförmige thermoplastische Material 7, das ein Pulverbett bildet, eingedrückt. In der mittleren Darstellung von Fig. 2 erkennt man, dass der Wabenkern 1 soweit abgesenkt wird, dass sein mit Wasser 2 benetzter unterer Bereich vollständig in das Pulverbett eingedrückt ist. Anschließend wird der Wabenkern 1 wie in der rechten Darstellung von Fig. 2 gezeigt ist, in Richtung des Pfeils 6 angehoben. Da der untere Bereich des Wabenkerns 1 mit Wasser 2 benetzt ist, ist das pulverförmige thermoplastische Material 7 temporär an dem Wabenkern 1 fixiert.

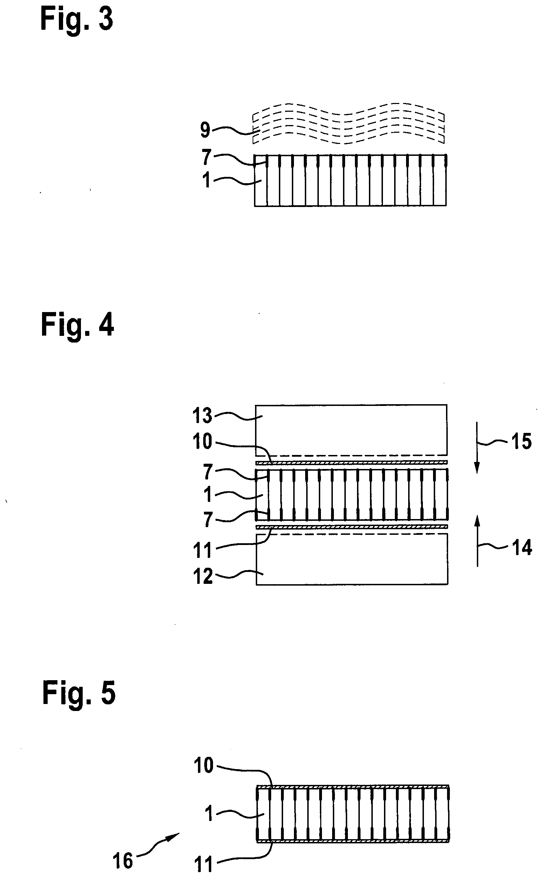

In einem dritten nicht erfindungsgemäßen Verfahrensschritt, der in Fig. 3 gezeigt ist, wird das auf dem Wabenkern 1 fixierte pulverförmige thermoplastische Material 7 aufgeschmolzen. Dazu wird - wie in Fig. 3 gezeigt ist - der Wabenkern 1 umgedreht, sodass sich die mit dem pulverförmigen thermoplastischen Material 7 versehene Seite oben befindet. Anschließend wird der mit dem pulverförmigen thermoplastischen Material 7 versehene Wabenkern 1 durch Infrarotstrahlung 9 erwärmt. Die Infrarotstrahlung 9 bewirkt, dass das pulverförmige thermoplastische Material 7 plastifiziert wird. In Abhängigkeit der Materialeigenschaften des verwendeten Thermoplasts wird das pulverförmige thermoplastische Material 7 soweit erwärmt, bis es seine Schmelztemperatur erreicht. Die Temperatur, bis zu der das an dem Wabenkern 1 fixierte pulverförmige thermoplastische Material 7 erwärmt wird, wird so gewählt, dass es nicht unter der Wirkung der Schwerkraft herunterläuft. Im Anschluss daran lässt man den Wabenkern 1 abkühlen.

Sofern der Wabenkern 1 beidseitig mit einer Decklage versehen werden soll, werden die in den Figuren 1 bis 3 gezeigten Verfahrensschritte an der Rückseite des Wabenkerns 1 wiederholt.

In einem vierten Verfahrensschritt, der in Fig. 4 gezeigt ist, erfolgt das Verbinden des mit dem thermoplastischen Material 7 versehenen Wabenkerns 1 mit Decklagen 10, 11. Dazu werden auf beiden Seiten des Wabenkerns 1 Decklagen 10, 11 aufgelegt. Anschließend wird der mit den Decklagen 10, 11 versehene Wabenkern 1 erneut erwärmt. Die Erwärmung erfolgt in diesem Ausführungsbeispiel in einer beheizten Presse. Durch die Erwärmung plastifiziert das thermoplastische Material 7 erneut. Die Presse umfasst zwei relativ zueinander verstellbare Pressenkomponenten 12, 13, die in Richtung der Pfeile 14, 15 aufeinander zu bewegt werden können. Zum Konsolidieren werden die Pressenkomponenten 12, 13 aufeinander zu bewegt, sodass die Decklagen 10, 11 im erwärmten Zustand mit dem mit dem thermoplastischen Material 7 versehenen Wabenkern 1 verpresst werden.

Nach dem Abkühlen kann die in Fig. 5 gezeigte Sandwichstruktur 16 aus der Presse entnommen werden. Die Sandwichstruktur 16 besteht aus dem Wabenkern 1 und den Decklagen 10, 11.

Nachfolgend wird ein zweites Ausführungsbeispiel des Verfahrens zur Herstellung einer Sandwichstruktur beschrieben. Diejenigen Verfahrensschritte, die mit denjenigen des ersten Ausführungsbeispiels übereinstimmen, werden nicht nochmals im Detail erläutert.

In einem ersten Verfahrensschritt wird der Wabenkern 1 mit Wasser als Haftmittel benetzt. Anschließend wird, wie in Fig. 2 gezeigt ist, das pulverförmige thermoplastische Material 7 aufgebracht, das an dem befeuchteten Wabenkern 1 haftet.

Abweichend von dem ersten Ausführungsbeispiel erfolgt kein Erwärmen und Aufschmelzen des an dem Wabenkern 1 fixierten pulverförmigen thermoplastischen Materials 7, stattdessen werden die beiden Decklagen 10, 11 unmittelbar auf die beiden Seiten des Wabenkerns 1 aufgelegt. Anschließend erfolgt das Erwärmen dieser Anordnung auf eine Temperatur, bei der das thermoplastische Material plastifiziert. In diesem Ausführungsbeispiel erfolgt das Konsolidieren in einem Ofen. Mittels einer geeigneten Vorrichtung werden die Decklagen 10, 11 gegen den Wabenkern 1 gepresst, sodass die Decklagen 10, 11 über ihre gesamte Fläche an dem Wabenkern 1 anliegen. Nach dem Abkühlen erhält man die in Fig. 5 gezeigte Sandwichstruktur 16.

Gemäß einem weiteren alternativen Verfahren erfolgt das Aufbringen des pulverförmigen thermoplastischen Materials 7 durch Bepulvern des Wabenkerns 1 mittels Druckluft. Das pulverförmige thermoplastische Material 7 wird mittels einer Druckluftpistole aufgebracht. Der Wabenkern 1 befindet sich dabei in einer Haltevorrichtung, die diejenigen Bereiche abdeckt, die nicht mit dem pulverförmigen thermoplastischen Material 7 versehen werden sollen. Dementsprechend ist die Vorrichtung so ausgebildet, dass lediglich eine Seite des Wabenkerns 1 und der sich daran direkt anschließende Bereich mit dem pulverförmigen thermoplastischen Material 7 versehen werden. Die weiteren Verfahrensschritte entsprechen den in den Fig. 3 bis Fig. 5 gezeigten Verfahrensschritten.

### BEZUGSZEICHENLISTE

- 1: Wabenkern
- 2: Wasser
- 3: Behälter
- 4: Unterseite
- 5: Pfeil
- 6: Pfeil
- 7: pulverförmiges thermoplastisches Material
- 8: Behälter
- 9: Infrarotstrahlung
- 10, 11: Decklage
- 12, 13: Pressenkomponente
- 14, 15: Pfeil
- 16: Sandwichstruktur

## Patentansprüche

1. Verfahren zur Herstellung einer Sandwichstruktur (16) mit einem Wabenkern (1) und wenigstens einer Decklage (10, 11), mit den folgenden Schritten:
- Aufbringen eines pulverförmigen thermoplastischen Materials (7) auf eine Seite des Wabenkerns (1),
- Auflegen der Decklage (10, 11) auf die mit dem pulverförmigen thermoplastischen Material (7) versehene Seite des Wabenkerns (1),
- Erwärmen des mit der Decklage (10, 11) versehenen Wabenkerns (1) zum Plastifizieren des thermoplastischen Materials (7), und
- Verpressen des Wabenkerns (1) und der Decklage (10, 11) in dem oder in einem erwärmten Zustand zur Herstellung der Sandwichstruktur (16), **dadurch gekennzeichnet, dass**
- in einem ersten Verfahrensschritt vor dem Aufbringen des pulverförmigen thermoplastischen Materials (7) ein Haftmittel auf den Wabenkern (1) aufgebracht wird,
- wobei Wasser (2) als Haftmittel verwendet wird,
- wobei das Haftmittel dazu dient, das pulverförmige thermoplastische Material (7) temporär an dem Wabenkern (1) zu fixieren, bis die Decklage (10,11) aufgelegt wird und das Verpressen des Wabenkerns (1) unter Erwärmung erfolgt, wobei
- nach dem ersten Verfahrensschritt kein Erwärmen und Aufschmelzen des an dem Wabenkern (1) fixierten pulverförmigen thermoplastischen Materials (7) erfolgt, und die Decklage (10, 11) unmittelbar auf die Seite des Wabenkerns (1) aufgelegt wird und anschließend das Erwärmen dieser Anordnung auf eine Temperatur erfolgt, bei der das thermoplastische Material (7) plastifiziert.

2. Verfahren nach Anspruch 1, **dadurch gekennzeichnet, dass** das thermoplastische Material (7) auf beide Seiten des Wabenkerns (1) aufgebracht wird, die jeweils mit einer Decklage (10, 11) versehen, erwärmt und verpresst werden.

3. Verfahren nach Anspruch 1 oder 2, **dadurch gekennzeichnet, dass** ein flüssiges Haftmittel verwendet wird.

4. Verfahren nach einem der vorangehenden Ansprüche, **dadurch gekennzeichnet, dass** das Haftmittel durch einen Tauchprozess oder durch einen Sprühprozess auf den Wabenkern (1) aufgetragen wird.

5. Verfahren nach einem der vorangehenden Ansprüche, **dadurch gekennzeichnet, dass** das pulverförmige thermoplastische Material (7) durch Eindrücken des Wabenkerns (1) in das pulverförmige thermoplastische Material (7) oder eine das Pulver enthaltende pastöse Masse und/oder durch Berieseln mit dem Pulver und/oder durch Bepulvern mittels Druckluft auf den Wabenkern (1) aufgebracht wird.

6. Verfahren nach einem der vorangehenden Ansprüche, **dadurch gekennzeichnet, dass** das Erwärmen und Plastifizieren des pulverförmigen thermoplastischen Materials mittels Infrarotstrahlung (9) oder eines Ofens oder einer beheizbaren Presse oder mittels einer Heißluftanlage oder bei einem elektrisch leitfähigen Wabenkern mittels induktiver Erwärmung erfolgt.

7. Verfahren nach einem der vorangehenden Ansprüche, **dadurch gekennzeichnet, dass** das auf den Wabenkern (1) aufgebrachte pulverförmige thermoplastische Material (7) auf eine Temperatur unterhalb seines Schmelzpunkts abgekühlt wird.

8. Verfahren nach einem der vorangehenden Ansprüche, **dadurch gekennzeichnet, dass** das Verpressen des Wabenkerns (1) in einem Pressprozess oder in einem Ofenprozess oder in einem Autoklavprozess oder in einem Schweißprozess oder in einem Prozess mit induktiver Erwärmung erfolgt.

9. Verfahren nach einem der vorangehenden Ansprüche, **dadurch gekennzeichnet, dass** pulverförmiges Polycarbonat als thermoplastisches Material (7) verwendet wird.

10. Verfahren nach einem der vorangehenden Ansprüche, **dadurch gekennzeichnet, dass** ein mit einem Flammschutzmittel versehenes pulverförmiges thermoplastisches Material (7) verwendet wird.

11. Sandwichstruktur (16) mit einem Wabenkern (1) und wenigstens einer Decklage (10, 11), wobei die Sandwichstruktur (16) durch ein Verfahren nach einem der Ansprüche 1 bis 10 hergestellt ist.

## Claims

1. Method for producing a sandwich structure (16) comprising a honeycomb core (1) and at least one outer layer (10, 11), with the following steps:
- applying a powdered thermoplastic material (7) to one side of the honeycomb core (1),
- placing the outer layer (10, 11) onto the side of the honeycomb core (1) that has been provided with the powdered thermoplastic material (7),
- heating the honeycomb core (1) provided with the outer layer (10, 11) until the thermoplastic material (7) plastifies, and
- pressing the honeycomb core (1) and the outer layer (10, 11) in the or in a heated state to produce the sandwich structure (16), **characterized in that**
- in a first method step, before applying the powdered thermoplastic material (7), a bonding agent is applied to the honeycomb core (1),
- wherein water (2) is used as the bonding agent,
- wherein the bonding agent serves the purpose of temporarily fixing the powdered thermoplastic material (7) on the honeycomb core (1) until the outer layer (10, 11) is placed on, and the pressing of the honeycomb core (1) is performed while heating, wherein
- after the first method step, no heating and melting of the powdered thermoplastic material (7) fixed on the honeycomb core (1) takes place, and the outer layer (10, 11) is placed directly onto the side of the honeycomb core (1) and then the heating of this arrangement is performed to a temperature at which the thermoplastic material (7) plastifies.

2. Method according to Claim 1, **characterized in that** the thermoplastic material (7) is applied to both sides of the honeycomb core (1), which are each provided with an outer layer (10, 11), heated and pressed.

3. Method according to Claim 1 or 2, **characterized in that** a liquid bonding agent is used.

4. Method according to one of the preceding claims, **characterized in that** the bonding agent is applied to the honeycomb core (1) by an immersing process or by a spraying process.

5. Method according to one of the preceding claims, **characterized in that** the powdered thermoplastic material (7) is applied to the honeycomb core (1) by pressing the honeycomb core (1) into the powdered thermoplastic material (7) or a pasty mass containing the powder and/or by sprinkling with the powder and/or by powder coating by means of compressed air.

6. Method according to one of the preceding claims, **characterized in that** the heating and plastifying of the powdered thermoplastic material is performed by means of infrared radiation (9) or an oven or a heatable press or by means of a hot air installation or, in the case of an electrically conductive honeycomb core, by means of inductive heating.

7. Method according to one of the preceding claims, **characterized in that** the powdered thermoplastic material (7) applied to the honeycomb core (1) is cooled down to a temperature below its melting point.

8. Method according to one of the preceding claims, **characterized in that** the pressing of the honeycomb core (1) is performed in a pressing process or in an oven process or in an autoclave process or in a welding process or in a process with inductive heating.

9. Method according to one of the preceding claims, **characterized in that** powdered polycarbonate is used as the thermoplastic material (7).

10. Method according to one of the preceding claims, **characterized in that** a powdered thermoplastic material (7) provided with a flame retardant is used.

11. Sandwich structure (16) comprising a honeycomb core (1) and at least one outer layer (10, 11), wherein the sandwich structure (16) is produced by a method according to one of Claims 1 to 10.

## Revendications

1. Procédé de fabrication d'une structure en sandwich (16) comprenant une âme en nid d'abeille (1) et au moins une couche de revêtement (10, 11), le procédé comprenant les étapes suivantes :
- appliquer une matière thermoplastique pulvérulente (7) sur un côté de l'âme en nid d'abeille (1),
- placer la couche de revêtement (10, 11) du côté de l'âme en nid d'abeille (1) qui est pourvu de la matière thermoplastique pulvérulente (7),
- chauffer l'âme en nid d'abeille (1), pourvue de la couche de revêtement (10, 11), pour plastifier la matière thermoplastique (7), et
- presser l'âme en nid d'abeille (1) et la couche de revêtement (10, 11) dans l'état chauffé ou dans un état chauffé pour réaliser la structure en sandwich (16), **caractérisé en ce que**
- dans une première étape de procédé, un agent adhésif est appliqué sur l'âme en nid d'abeille (1) avant d'appliquer la matière thermoplastique pulvérulente (7),
- de l'eau (2) étant utilisée comme agent adhésif,
- l'adhésif servant à fixer temporairement la matière thermoplastique pulvérulente (7) sur l'âme en nid d'abeille (1) jusqu'à ce que la couche de revêtement (10, 11) soit placée et que l'âme en nid d'abeille (1) soit pressée par chauffage,
- après la première étape de procédé, aucun chauffage ni fusion de la matière thermoplastique pulvérulente (7) fixée à l'âme en nid d'abeille (1) n'étant effectuée, et la couche de revêtement (10, 11) étant placée directement sur le côté de l'âme en nid d'abeille (1) puis le chauffage de cet ensemble étant effectué à une température à laquelle la matière thermoplastique (7) se plastifie.

2. Procédé selon la revendication 1, **caractérisé en ce que** la matière thermoplastique (7) est appliquée sur les deux côtés de l'âme en nid d'abeille (1) qui sont chacun pourvus d'une couche de revêtement (10, 11), chauffés et pressés.

3. Procédé selon la revendication 1 ou 2, **caractérisé en ce que** l'on utilise un agent adhésif liquide.

4. Procédé selon l'une des revendications précédentes, **caractérisé en ce que** l'agent adhésif est appliqué sur l'âme en nid d'abeille (1) par un processus d'immersion ou par un processus de pulvérisation.

5. Procédé selon l'une des revendications précédentes, **caractérisé en ce que** la matière thermoplastique pulvérulente (7) est appliquée sur l'âme en nid d'abeille (1) par enfoncement de l'âme en nid d'abeille (1) dans la matière thermoplastique pulvérulente (7) ou dans une matière pâteuse contenant la poudre et/ou par aspersion avec la poudre et/ou par saupoudrage à l'air comprimé.

6. Procédé selon l'une des revendications précédentes, **caractérisé en ce que** le chauffage et la plastification de la matière thermoplastique pulvérulente sont effectués au moyen d'un rayonnement infrarouge (9) ou d'un four ou d'une presse chauffante ou au moyen d'une installation à air chaud ou, dans le cas d'une âme en nid d'abeille électriquement conductrice, au moyen d'un chauffage inductif.

7. Procédé selon l'une des revendications précédentes, **caractérisé en ce que** la matière thermoplastique pulvérulente (7) appliquée sur l'âme en nid d'abeille (1) est refroidie à une température inférieure à son point de fusion.

8. Procédé selon l'une des revendications précédentes, **caractérisé en ce que** le pressage de l'âme en nid d'abeille (1) est effectué dans un processus de pressage ou dans un processus au four ou dans un processus à l''autoclave ou dans un processus de soudage ou dans un processus avec chauffage inductif.

9. Procédé selon l'une des revendications précédentes, **caractérisé en ce que** du polycarbonate pulvérulent est utilisé comme matière thermoplastique (7) .

10. Procédé selon l'une des revendications précédentes, **caractérisé en ce qu'**une matière thermoplastique pulvérulente (7) est utilisée qui est munie d'un retardateur de flamme.

11. Structure en sandwich (16) pourvue d'une âme en nid d'abeille (1) et d'au moins une couche de revêtement (10, 11), la structure en sandwich (16) étant réalisée par un procédé selon l'une des revendications 1 à 10.
